# EUROPÄISCHE PATENTANMELDUNG

(11) **EP 1 782 980 A1**
(43) Veröffentlichungstag der Anmeldung: **09.05.2007**
(21) Anmeldenummer: 05023865.8
(22) Anmeldetag: 02.11.2005
(51) Int. Cl.: B60J 3/02

(54) **Sonnenblendenhalterung**

(71) Anmelder: Delphi Technologies, Inc., Troy, MI 48007 (US)
(72) Erfinder: Hoffmann, Uwe, 42781 Haan (DE); Herlitz, Martin, 42897 Remscheid (DE); Schekalla, Peter, 42329 Wuppertal (DE); Pitala, Krzysztof, 34-730 Mszana Dolna (PL)
(74) Vertreter: Manitz, Finsterwald & Partner GbR

(57) **Zusammenfassung**

Die Erfindung betrifft eine Sonnenblendenhalterung mit einer Kontakteinrichtung für elektrische Verbraucher in der Sonnenblende insbesondere eines Kraftfahrzeugs, umfassend ein Befestigungselement (22) mit einer im Profil schnabelförmigen Ausnehmung (32) zur Befestigung einer Sonnenblende, einen Sonnenblendenträger (20), eine Schwenkachse (41), an der das Befestigungselement (22) mit der schnabelförmigen Ausnehmung (32) angelenkt werden kann und durch Drehung um die Schwenkachse (41) an den Träger geschwenkt werden kann, einem trägerseitigen Kontaktelement (34) an dem Träger mit wenigstens einem elektrischen Kontakt (36), einem sonnenblendenseitigen Kontaktelement (24) an dem Befestigungselement (22) der Sonnenblende mit wenigstens einem elektrischen Kontakt (30) wobei das sonnenblendenseitige Kontaktelement (34) und das trägerseitige Kontaktelement derart angeordnet sind, dass sie beim Verschwenken des Befestigungselementes um die Schwenkachse in Richtung des Trägers zur Bildung wenigstens einer elektrischen Verbindung in Kontakt kommen.

## Beschreibung

Die Erfindung betrifft eine Sonnenblendenhalterung für eine Sonnenblende mit einem elektrischen Verbraucher.

Sonnenblenden zum Beispiel in Kraftfahrzeugen weisen zunehmend elektrische Verbraucher, wie zum Beispiel die Beleuchtung eines Kosmetikspiegels auf. Bei bekannten Lösungen werden die elektrischen Verbindungen zu diesen Verbrauchern über Kabel mit gewöhnlichen Kabelsteckverbindungen hergestellt.

Die Kabelsteckverbindung muss in einem vorgelagerten Produktsschritt an dem Dachhimmel in der Regel mit zwei Händen montiert und in einem Metallhalter positioniert werden. Bei einer gegebenenfalls durchzuführenden Reparatur muss der Stecker aufwändig mit einem Hilfswerkzeug aus der Metallhalterung gelöst werden und durch eine Überlänge im Kabelstrang außerhalb der Montageöffnung auseinander gesteckt werden. Nach der Reparatur des elektrischen Verbrauchers in der Sonnenblende oder nach dem Austausch der Sonnenblende muss der Stecker wieder außerhalb der Montageöffnung zusammengesteckt und in dem Metallhalter positioniert werden. Nach dem Einsetzen der Sonnenblende ist eine Befestigung in dem Metallhalter nicht mehr möglich.

Aufgabe der vorliegenden Erfindung ist es, eine Sonnenblendenhalterung anzugeben, die eine einfache Kontaktierung eines elektrischen Verbrauchers in der Sonnenblende ermöglicht.

Diese Aufgabe wird mit einer Sonnenblendenhalterung mit den Merkmalen des Anspruchs 1 gelöst. Eine Sonnenblende mit einer erfindungsgemäßen Sonnenblendenhalterung ist Gegenstand des Anspruchs 10. Unteransprüche sind auf bevorzugte Ausführungsformen gerichtet.

Die erfindungsgemäße Sonnenblendenhalterung ist für eine Sonnenblende zum Beispiel eines Kraftfahrzeugs geeignet und weist eine Kontakteinrichtung für elektrische Verbraucher in der Sonnenblende auf. Es ist ein Befestigungselement mit einer im Profil schnabelförmigen Ausnehmung zur Befestigung einer Sonnenblende vorgesehen, das mit seiner schnabelförmigen Ausnehmung derart an einer Schwenkachse angelenkt werden kann, dass es durch Drehung um die Schwenkachse an den Träger geschwenkt werden kann. Bei dem Träger kann es sich um ein Trägerelement handeln, das zum Beispiel an der Innenseite eines Daches eines Fahrzeugs befestigt ist. Bei entsprechender Ausgestaltung kann es sich auch um die Innenverkleidung selbst handeln oder einen Teil der Innenverkleidung mit umfassen.

An dem Träger der erfindungsgemäßen Sonnenblendenhalterung ist ein trägerseitiges Kontaktelement mit wenigstens einem elektrischen Kontakt vorgesehen. An dem Befestigungselement der Sonnenblende ist ein sonnenblendenseitiges Kontaktelement mit wenigstens einem elektrischen Kontakt angeordnet. Das sonnenblendenseitige Kontaktelement und das trägerseitige Kontaktelement sind derart zueinander angeordnet, dass beim Verschwenken des Befestigungselements um die Schwenkachse in Richtung des Trägers das sonnenblendenseitige und das trägerseitige Kontaktelement zur Bildung wenigstens einer elektrischen Verbindung in Kontakt kommen.

Vorzugsweise ist das trägerseitige Kontaktelement an der Rückseite des Sonnenblendenträgers vorgesehen um eine besonders robuste elektrische Verbindung zu gewährleisten. Das sonnenblendenseitige Kontaktelement ist dann zum Beispiel an dem Teil der schnabelförmigen Ausnehmung angeordnet, der beim Anlenkvorgang des Befestigungselementes vorausläuft, vorzugsweise derart, dass die elektrischen Kontakte nach innen weisen.

Die erfindungsgemäße Sonnenblendenhalterung ermöglicht also einen elektrischen Kontakt zwischen dem trägerseitigen und dem sonnenblendenseitigen Kontaktelement durch einfaches Anlenken und Verschwenken des Befestigungselements um die Schwenkachse. Gesonderte Steckverbindungen müssen nicht mehr hergestellt werden, da alleine durch die Befestigung der Sonnenblende an dem Sonnenblendenträger der elektrische Kontakt bereits selbsttätig hergestellt wird.

Im Reparaturfall muss nur das Befestigungselement der Sonnenblende von dem Träger weggeschwenkt werden und nach der Reparatur oder nach dem Austausch einfach wieder angelenkt und zum Träger hin geschwenkt werden. Die elektrische Kontaktierung wird beim Wegschwenken automatisch gelöst und beim Hinschwenken automatisch wieder hergestellt.

Bei der Schwenkachse kann es sich zum Beispiel um ein Element oder eine Stange handeln. Besonders vorteilhaft ist eine Ausführungsform, bei der die Schwenkachse eine Kante einer Aufnahme in dem Sonnenblendenträger umfasst. Diese Aufnahme kann das montierte Befestigungselement umgeben und bietet eine einfache Montage.

Die Schwenkachse kann auch durch die Kante einer Öffnung in der Innenverkleidung, insbesondere der Dachinnenverkleidung eines Fahrzeuges, gebildet sein, die einer Kante einer Aufnahme in dem Sonnenblendenträger benachbart ist, insbesondere daran anliegt. Die Innenverkleidung kann dann auch zur zumindest teilweisen Verkleidung des Sonnenblendenträgers eingesetzt werden.

Die Schwenkachse ist dementsprechend nicht notwendigerweise ein starres Element, sondern kann auch eine gewisse Flexibilität aufweisen, wenn sie zum Beispiel an der Kante einer Öffnung in einer Innenverkleidung liegt, die aus flexiblem Material besteht.

Die elektrischen Kontakte des sonnenblendenseitigen Kontaktelements sind bei einer bevorzugten Ausführungsform als Bogenkontakte (Bow-Terminals) ausgestaltet, die eine sichere Verbindung zum Beispiel mit Kontakten bieten, die durch Leiterbahnen an einem entsprechenden Kontaktgegenelement gebildet werden. Das trägerseitige Kontaktelement kann zum Beispiel einen Flachleiter (FFC, Flexible Flat Cable) oder ein FPC-Kontaktelement (Flexible Printed Circuit-Kontaktelement) umfassen. Eine solche Kontaktgeometrie wirkt besonders effektiv mit Bogenkontakten zusammen, die an dem sonnenblendenseitigen Kontaktelement vorgesehen sein können.

Bei anderen Ausführungsformen ist zum Beispiel am sonnenblendenseitigen Kontaktelement ein Flachleiter oder ein FPC-Kontakt vorgesehen und an dem trägerseitigen Kontaktelement als Bogenkontakte ausgestaltete Kontakte.

Bei einer Sonnenblende, bei dem eines der Kontaktelemente zum Beispiel als Flachleiter oder als FPC-Kontaktelement ausgebildet ist, können dessen einzelnen Kontakte etwas breiter sind als die Gegenkontakte, so dass beim Kontaktieren durch das Gegenkontaktelement eine sichere Verbindung auch gewährleistet ist, wenn gegebenenfalls auftretende kleine laterale Toleranzen auszugleichen sind.

Das sonnenblendenseitige Kontaktelement und das Befestigungselement können zum Beispiel aneinander geklebt oder geschraubt werden. Bei einer besonders kostengünstigen und einfachen Ausgestaltung sind das sonnenblendenseitige Kontaktelement und das Befestigungselement aus einem Stück gebildet, vorzugsweise als ein Spritzgussteil, in dem die Kontakte des sonnenblendenseitigen Kontaktelements integriert sind.

Bei einer anderen vorteilhaften Ausführungsform umfasst das sonnenblendenseitige Kontaktelement eine Aufnahme für einen Stecker, der die elektrischen Kontakte trägt und eine Verbindung der Kontakte zu den elektrischen Zuleitungen bereitstellt. So ein Stecker kann in die Aufnahme eingesetzt werden und dort mit entsprechend vorgesehenen Verriegelungseinrichtungen verklipst oder verriegelt werden. Anschließend wird auch bei dieser Ausführungsform das Befestigungselement zusammen mit dem sonnenblendenseitigen Kontaktelement wie beschrieben an dem Sonnenblendenträger angelenkt.

Zur Fixierung des an den Träger hin geschwenkten Befestigungselements ist bei einer Weiterbildung der Erfindung eine Fixiereinrichtung vorgesehen. Diese wird vorzugsweise durch wenigstens eine Befestigungsschraube gebildet, mit der das Befestigungselement an dem Sonnenblendenträger befestigt wird.

Bei einer bevorzugten Ausführungsform der erfindungsgemäßen Sonnenblendenhalterung sind Führungselemente vorgesehen, die beim Anlenken und/oder Verschwenken des Befestigungselements in die Aufnahme derart eine Selbstjustierung des Befestigungselements bewirken, dass das trägerseitige Kontaktelement und das sonnenblendenseitige Kontaktelement zur Bildung der gewünschten elektrischen Verbindung zusammengeführt werden. Derartige Führungselemente erleichtern die Montage zusätzlich, da keine besonderen Vorkehrungen zur gegenseitigen Justierung der Kontaktelemente vorgenommen werden müssen.

Die erfindungsgemäße Sonnenblendenhalterung kann bei Fahrzeugen, insbesondere Kraftfahrzeugen Anwendung finden. Ebenso ist die Verwendung auch bei anderen Sonnenblenden, zum Beispiel in Flugzeugen, möglich.

Die Erfindung wird im vorliegenden Text anhand einer Sonnenblende am Dach eines Fahrzeuges erläutert. Sie ist jedoch ebenso bei Sonnenblenden anwendbar, die an anderer Stelle angeordnet sind. In einem solchen Fall ist der Sonnenblendenträger nicht hinter einer Dachinnenverkleidung sondern hinter einer anderen Verkleidung vorgesehen.

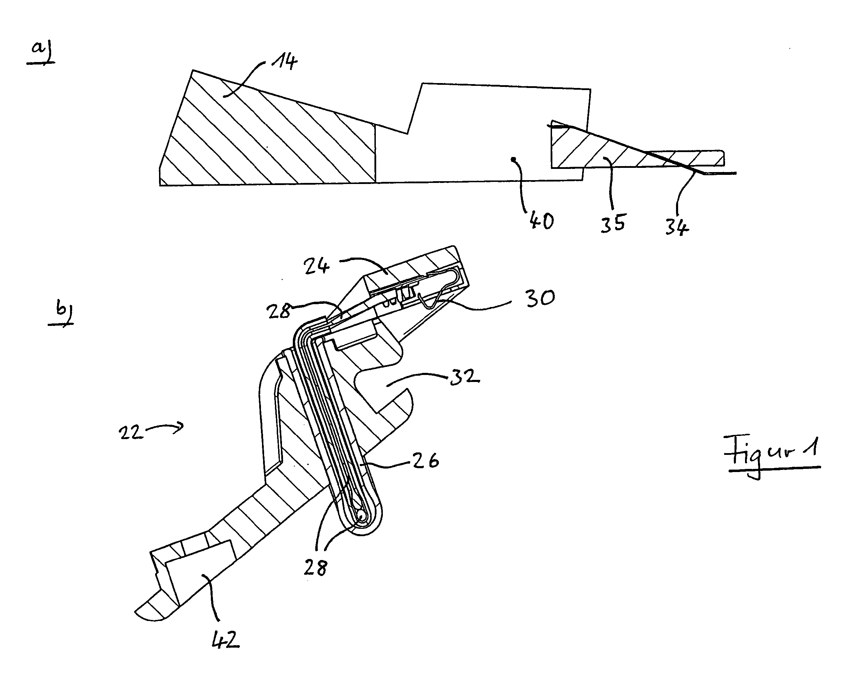

Die Erfindung wird anhand der beiliegenden Figuren im Detail erläutert, die schematisch eine Ausführungsform der Erfindung darstellen. Dabei zeigt
- Fig. 1: eine seitliche Schnittansicht durch zwei Hauptkomponenten der erfindungsgemäßen Sonnenblendenhalterung,
- Fig. 2: eine seitliche Schnittansicht der Hauptkomponenten der erfindungsgemäßen Sonnenblendenhalterung in montiertem Zustand,
- Fig. 3: eine perspektivische Ansicht der beiden Hauptkomponenten einer erfindungsgemäßen Sonnenblendenhalterung,
- Fig. 4: das Befestigungselement einer erfindungsgemäßen Sonnenblendenhalterung in perspektivischer Darstellung,
- Fig. 5: die beiden Hauptkomponenten einer erfindungsgemäßen Sonnenblendenhalterung in montiertem Zustand in perspektivischer Ansicht schräg von oben,
- Fig. 6: die beiden Hauptkomponenten einer erfindungsgemäßen Sonnenblendenhalterung in montiertem Zustand in einer anderen perspektivischen Ansicht schräg von unten, und
- Fig. 7: eine perspektivische Ansicht des Teiles der erfindungsgemäßen Sonnenblendenhalterung zur elektrischen Kontaktierung.

Die Erfindung wird anhand einer Sonnenblendenhalterung in einem Kraftfahrzeug erläutert.

Teilfigur 1a zeigt einen Teil einer erfindungsgemäßen Sonnenblendenhalterung, der kraftfahrzeugseitig angeordnet ist, im seitlichen Schnitt. In einem Kunststoffteil 14 ist eine Aufnahme 40 vorgesehen. Ein FPC-Kontaktelement (Flexible-Printed-Circuit-Kontaktelement) 34 ist an einem FPC-Kontaktelementhalter 35 befestigt.

Teilfigur 1b zeigt einen Sonnenblendenfuß 22 als korrespondierendes Befestigungselement. Er weist eine schnabelförmige Ausnehmung 32 und ein Durchgangsloch 42 für eine Befestigungsschraube auf. Eine Kabelführung 26 führt ein oder mehrere Kabel 28 durch den Sonnenblendenfuß 22 zu einem als Kontaktgehäuse 24 ausgebildeten Kontaktelement, insbesondere zu den darin angeordneten Bogenkontakten (Bow-Terminals) 30. Bei der dargestellten Ausführungsform weist das Kabel 28 zwei Leitungsadern auf.

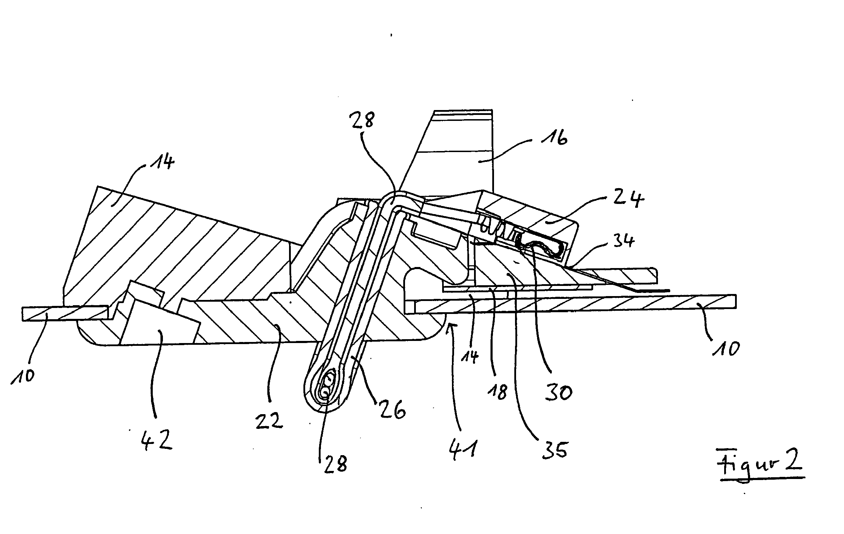

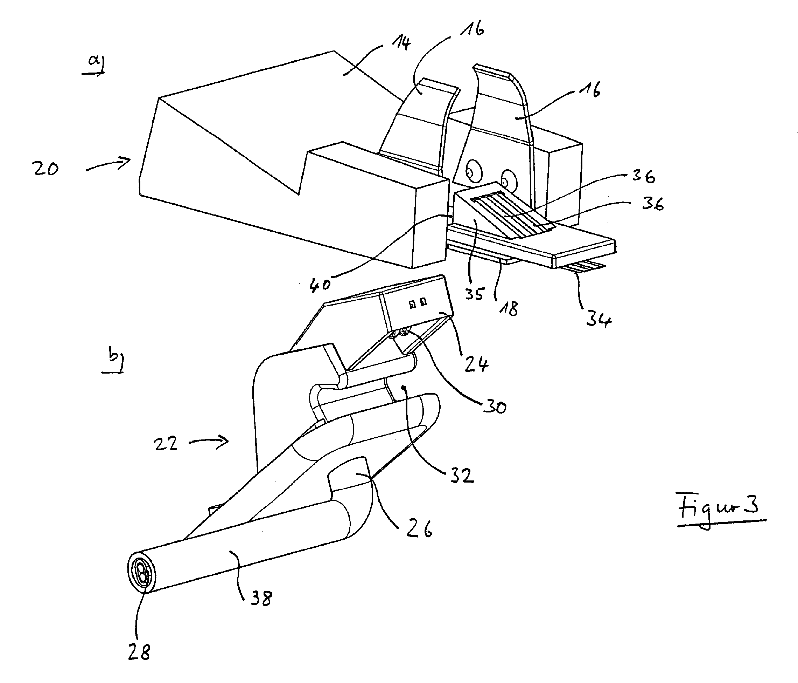

Fig. 2 zeigt die zwei wesentlichen Komponenten der Ausführungsform des erfindungsgemäßen Sonnenblendenhalters in montiertem Zustand im seitlichen Schnitt. Hier ist erkennbar, wie das Kunststoffträgerteil 14 auf der Rückseite einer Dachinnenverkleidung 10 des Kraftfahrzeuges aufliegt. In der Aufnahme 40 des Trägerteiles 14 ist in mit Bezug zu Fig. 3 noch zu erläuternder Weise ein Metallelement 16 befestigt. Mit diesem Metallelement 16 ist in ebenfalls noch zu erläuternder Weise ein Trägerblech 18 verbunden.

Die Einheit aus Trägerteil 14, Führung 16 und Trägerblech 18 wird im Folgenden als Träger 20 bezeichnet.

Fig. 2 zeigt außerdem, dass der Sonnenblendenfuß 22 in die Aufnahme 40 des Trägerteiles 14 eingepasst werden kann. Dazu wird die schnabelförmige Ausnehmung 32 auf die vordere Kante der Aufnahme, also bei der gezeigten Ausführungsform an die Kante der Dachinnenverkleidung 10 bzw. des Trägerbleches 18 angelegt und um die so gebildete Schwenkachse 41 nach oben geklappt, so dass der Sonnenblendenfuß 22 an der Dachinnenverkleidung 10 bzw. dem Trägerteil 14 anliegt. Mithilfe einer Befestigungsschraube, die durch das Durchgangsloch 42 geführt wird, kann der Sonnenblendenfuß endgültig an dem Trägerteil 14 fixiert werden. Das dazu in dem Trägerteil 14 vorgesehene Gewinde ist in Fig. 2 nicht dargestellt.

Erkennbar ist außerdem, wie die Bogenkontakte 30 sich an die Kontakte des FPC-Kontaktelementes 34 andrücken.

Fig. 3 zeigt die getrennten Elemente in perspektivischer Darstellung. Der Träger 20 wird wie beschrieben durch das Trägerteil 14, die Führung 16 und das Trägerblech 18 gebildet. Erkennbar ist in Teilfigur 3a, dass die Führungen 16, die zum Beispiel aus Metall sind, in der Aufnahme 40 des Trägerteiles 14 befestigt sind. Die Führungen 16 sind durch das Trägerblech 18 miteinander verbunden, was in Teilfigur 3a nicht erkennbar ist. Zum Beispiel können die Führungen 16 und das Trägerblech 18 aus einem entsprechend geformten und gebogenen Metallblech einstückig gebildet sein. Auf dem Trägerblech 18 liegt der FPC-Kontaktelementhalter 35 auf, der das FPC-Kontaktelement 34 trägt. Das Kontaktelement 34 weist einzelne Kontaktelemente 36 auf, die zum Beispiel durch entsprechende Leiterbahnen gebildet sein können.

Teilfigur 3b zeigt den Sonnenblendenfuß ebenfalls in perspektivischer Darstellung. Hier ist insbesondere erkennbar, dass die Kabel 28 in der Sonnenblendenachse 38 geführt sind. Sie führen in nicht dargestellter Weise zu einem elektrischen Verbraucher in der Sonnenblende, zum Beispiel einem beleuchteten Kosmetikspiegel. Die Achse 38 trägt in an sich bekannter Weise eine Sonnenblende, die um die Achse 38 heruntergeklappt bzw. heraufgeklappt werden kann.

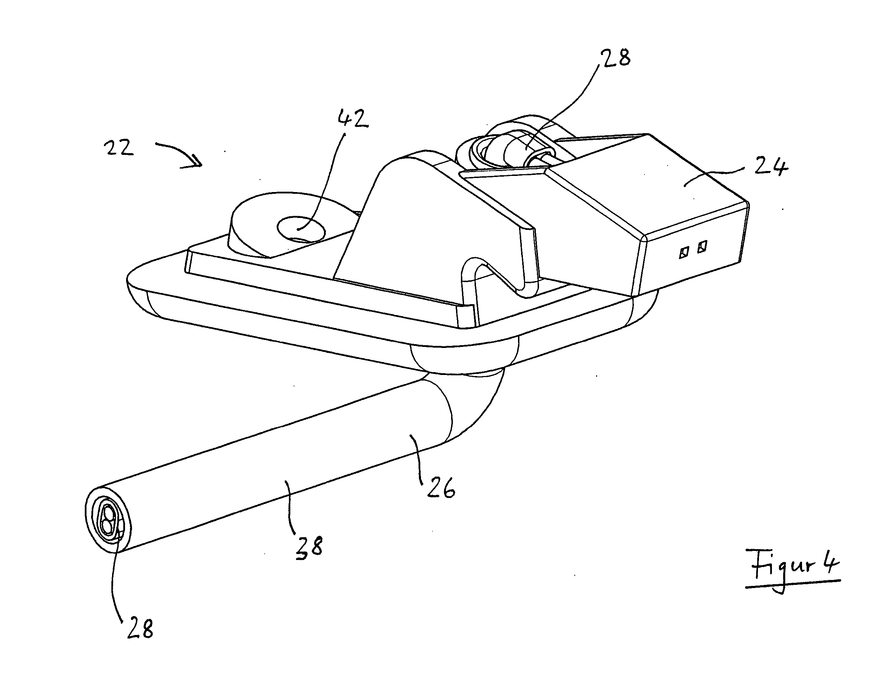

In Fig. 4 ist der Sonnenblendenfuß 22 in einer anderen perspektivischen Ansicht gezeigt.

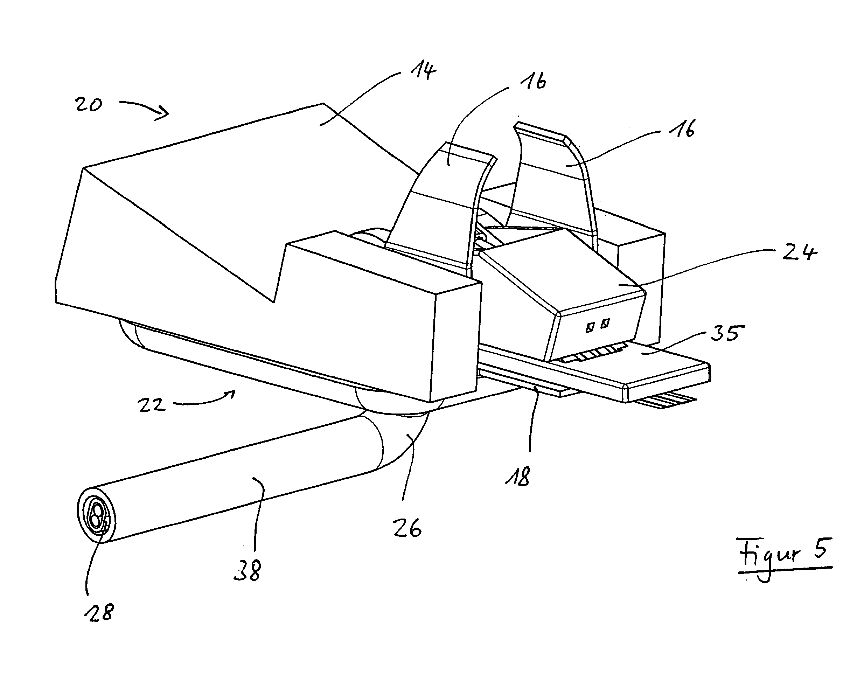

Fig. 5 zeigt in perspektivischer Ansicht, wie der Sonnenblendenfuß 22 in dem Träger 20 montiert ist, nachdem er mithilfe einer in Fig. 5 nicht sichtbaren Befestigungsschraube durch das Durchgangsloch 42 an dem Trägerteil 14 festgeschraubt wurde.

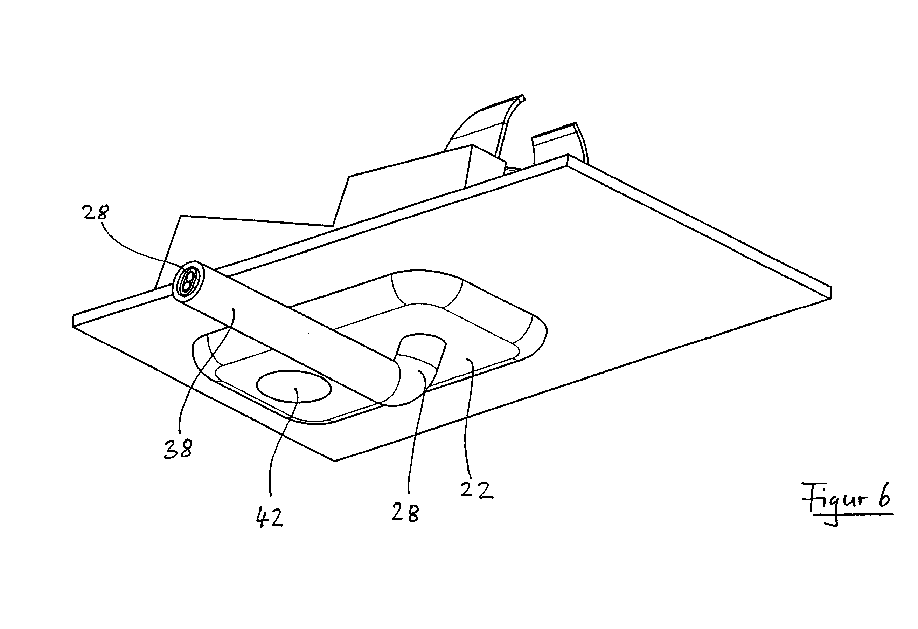

Fig. 6 zeigt die montierte Anordnung der Fig. 5 in einer perspektivischen Darstellung von unten, wie sie aus dem Fahrzeuginnenraum zu sehen ist.

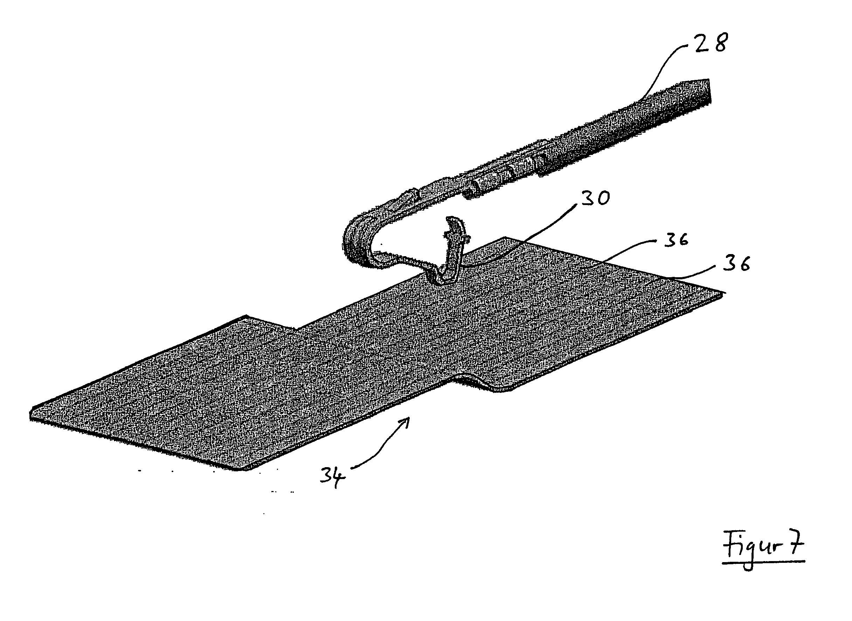

In Fig. 7 ist die Kontaktgeometrie im Detail gezeigt. Erkennbar ist hier das FPC-Kontaktelement 34 mit sechs Leiterbahnen 36 als Kontakte. 30 zeigt einen Bogenkontakt, der mit einer Ader des Kabels 28 in Verbindung steht.

Die erfindungsgemäße Sonnenblendenhalterung wird wie folgt eingesetzt. Der Sonnenblendenfuß 22 wird mit dem Kontaktierungsgehäuse 24 voraus durch die Aufnahme 40 des Trägers 20 geführt, bis die schnabelförmige Aufnahme 32 an der Dachinnenverkleidung 10 bzw. den dahinter angeordneten Teil 18 des Sonnenblendenträgers 20 anschlägt. Dieser Anschlagpunkt bildet jetzt eine Achse 41, um die der Sonnenblendenfuß 22 nach oben geschwenkt wird, bis sein hinteres Ende an dem Teil 14 des Trägers 20 bzw. an der Dachinnenverkleidung 10 anliegt. Ist die Dachinnenverkleidung aus flexiblem Material, so ist die Schwenkachse nicht starr und bietet eine gewisse Flexibilität beim Einbau.

Bei dem Schwenkvorgang gelangen die Bogenkontakte 30 mit den Kontakten 36 des FPC-Kontaktelementes 34 in Verbindung. Dieser Zustand ist in Fig. 2 im Schnitt gezeigt. Das Einführen des Sonnenblendengehäuses in den Träger 20 wird insbesondere durch die eine Führung darstellenden seitlichen Wände der Aufnahme 40 derart gelenkt, dass die Bogenkontakte 30 auf den Kontakten 36 des FPC-Kontaktes 34 zu liegen kommen. Leichte laterale Toleranzen sind unerheblich, da die Kontakte 36 etwas verbreitert sind. Außerdem dienen die Führungen 16 zur zusätzlichen Positionierung.

Durch die Durchgangsöffnung 42 wird eine Befestigungsschraube eingeführt, die in nicht dargestellter Weise in dem Teil 14 des Sonnenblendenträgers 20 festgeschraubt wird. Durch die Fixierung durch das Befestigungsloch 42 hindurch ist eine feste mechanische Halterung für den Sonnenblendenfuß 22 gewährleistet.

Eine elektrische Verbindung zwischen den elektrischen Kontakten 36 des FPC-Kontaktelementes 34 und den Bogenkontakten 30 ist nun hergestellt, so dass durch das Kabel 28 elektrische Energie zur Verfügung gestellt werden kann, die zum Beispiel zum Betrieb eines Kosmetikspiegels in der Sonnenblende verwendet werden kann.

Ist zum Beispiel eine Reparatur notwendig, so kann durch einfaches Lösen der Befestigungsschraube an der Öffnung 42 und Herausklappen des Sonnenblendenfußes 22 aus der Aufnahme 40 die Demontage der Sonnenblende vorgenommen werden. Der elektrische Kontakt zwischen den Bogenkontakten 30 des Sonnenblendenfußes 22 und der elektrischen Kontakte 36 auf dem FPC-Kontaktelement 34 wird automatisch gelöst, ohne dass ein Stecker auseinander gesteckt werden müsste. Die Sonnenblende kann ausgewechselt werden oder eine Reparatur daran vorgenommen werden. Im Anschluss kann die Sonnenblende auf die einfache beschriebene Weise wieder eingesetzt werden, wobei automatisch der elektrische Kontakt zwischen den Bogenkontakten 30 und den Kontakten 36 des FPC-Kontaktelementes 34 wiederhergestellt wird.

Sowohl der Produktionsablauf als auch die Wartung im Reparaturfall sind mit der erfindungsgemäßen Sonnenblendenhalterung sehr einfach. Die Kontaktierung erfolgt automatisch und direkt. Es entfallen Kontaktstecker und die Anordnung ist sehr reparaturfreundlich. Bei der Montage finden sich die elektrischen Verbindungen in selbstjustierender Weise.

### Bezugszeichenliste

- 10: Dachinnenverkleidung
- 14: Trägerteil
- 16: Führung
- 18: Trägerblech
- 20: Träger
- 22: Sonnenblendenfuß
- 24: Kontaktgehäuse
- 26: Kabelführung
- 28: Kabel
- 30: Bogenkontakt
- 32: schnabelförmige Ausnehmung
- 34: FPC-Kontaktelement
- 35: FPC-Kontaktelementhalter
- 36: Kontakte des FPC-Kontaktelementes
- 38: Sonnenblendenachse
- 40: Aufnahme
- 41: Schwenkachse/Kante der Aufnahme
- 42: Durchgangsloch für eine Befestigungsschraube

## Patentansprüche

1. Sonnenblendenhalterung mit einer Kontakteinrichtung für elektrische Verbraucher in der Sonnenblende insbesondere eines Kraftfahrzeuges, umfassend
- ein Befestigungselement (22) mit einer im Profil schnabelförmigen Ausnehmung (32) zur Befestigung einer Sonnenblende,
- einen Sonnenblendenträger (20),
- eine Schwenkachse (41), an der das Befestigungselement (22) mit der schnabelförmigen Ausnehmung (32) angelenkt werden kann und die derart angeordnet ist, dass das angelenkte Befestigungselement (20) durch Drehung um die Schwenkachse an den Sonnenblendenträger (20) geschwenkt werden kann,
- einem trägerseitigen Kontaktelement (34) an dem Sonnenblendenträger (20), vorzugsweise an dessen Rückseite, mit wenigstens einem elektrischen Kontakt (36),
- einem sonnenblendenseitigen Kontaktelement (24) an dem Befestigungselement (22) der Sonnenblende mit wenigstens einem elektrischen Kontakt (30),
wobei das sonnenblendenseitige Kontaktelement (24) und das trägerseitige Kontaktelement (34) derart angeordnet sind, dass sie beim Verschwenken des Befestigungselementes (22) um die Schwenkachse (41) in Richtung des Sonnenblendenträgers (20) zur Bildung wenigstens einer elektrischen Verbindung in Kontakt kommen.

2. Sonnenblendenhalterung nach Anspruch 1, bei der die Schwenkachse (41) eine Kante einer Aufnahme (40) in dem Sonnenblendenträger (20) oder eine Kante einer Öffnung in einer zum Sonnenblendenträger (20) benachbarten und den Sonnenblendenträger (20) zumindest teilweise verkleidenden Innenverkleidung (10) umfasst.

3. Sonnenblendenhalterung nach einem der Ansprüche 1 oder 2, bei der das sonnenblendenseitige Kontaktelement wenigstens einen in Form eines Bogenkontaktes ausgestalteten Kontakt (30) umfasst.

4. Sonnenblendenhalterung nach einem der Ansprüche 1 bis 3, bei der das trägerseitige Kontaktelement einen Flachleiter oder ein FPC-Kontaktelement (34) umfasst.

5. Sonnenblendenhalterung nach Anspruch 4, bei der die einzelnen Kontakte (36) des Flachleiters oder des FPC-Kontaktelementes (34) verbreitert sind.

6. Sonnenblendenhalterung nach einem der Ansprüche 1 bis 5, bei der der Sonnenblendenträger (20) an der Rückseite der Innenverkleidung (10) eines Fahrzeuges befestigt ist oder Teil der Innenverkleidung ist.

7. Sonnenblendenhalterung nach einem der Ansprüche 1 bis 6, bei der das sonnenblendenseitige Kontaktelement (24) und das Befestigungselement (22) aus einem Stück gebildet sind, vorzugsweise als ein Spritzgussteil.

8. Sonnenblendenhalterung nach einem der Ansprüche 1 bis 7 mit einer Fixiereinrichtung, vorzugsweise wenigstens einer Befestigungsschraube, mit der das Befestigungselement (22) der Sonnenblende nach Anlenken an der Schwenkachse (41) und Verschwenken in Richtung des Trägers (20) fixiert werden kann.

9. Sonnenblendenhalterung nach einem der Ansprüche 1 bis 8 mit Führungselementen (16), die derart angeordnet sind, dass sie beim Anlenken und/oder Verschwenken des Befestigungselementes (22) eine solche Selbstjustierung des Befestigungselementes (22) bewirken, dass das trägerseitige Kontaktelement (34) und das sonnenblendenseitige Kontaktelement (24) zur Bildung der gewünschten elektrischen Verbindung zusammengeführt werden.

10. Sonnenblende, insbesondere für ein Kraftfahrzeug, mit
- einer Sonnenblendenhalterung nach einem der Ansprüche 1 bis 9 und
- wenigstens einem elektrischen Verbraucher, der mit Hilfe der Kontakteinrichtung für elektrische Verbraucher kontaktiert werden kann.

## Geänderte Patentansprüche

### Geänderte Patentansprüche gemäss Regel 86(2) EPÜ.

**1.** Sonnenblendenhalterung mit einer Kontakteinrichtung für elektrische Verbraucher in der Sonnenblende insbesondere eines Kraftfahrzeuges, umfassend
- ein Befestigungselement (22) mit einer im Profil schnabelförmigen Ausnehmung (32) zur Befestigung einer Sonnenblende,
- einen Sonnenblendenträger (20),
- eine Schwenkachse (41), an der das Befestigungselement (22) mit der schnabelförmigen Ausnehmung (32) angelenkt werden kann und die derart angeordnet ist, dass das angelenkte Befestigungselement (20) durch Drehung um die Schwenkachse an den Sonnenblendenträger (20) geschwenkt werden kann,
- einem trägerseitigen Kontaktelement (34) an dem Sonnenblendenträger (20) mit wenigstens einem elektrischen Kontakt (36),
- einem sonnenblendenseitigen Kontaktelement (24) an dem Befestigungselement (22) der Sonnenblende mit wenigstens einem elektrischen Kontakt (30),
wobei das sonnenblendenseitige Kontaktelement (24) und das trägerseitige Kontaktelement (34) derart angeordnet sind, dass sie beim Verschwenken des Befestigungselementes (22) um die Schwenkachse (41) in Richtung des Sonnenblendenträgers (20) zur Bildung wenigstens einer elektrischen Verbindung in Kontakt kommen,
**dadurch gekennzeichnet, dass**
das trägerseitige Kontaktelement (34) an der Rückseite des Sonnenblendenträgers (20) vorgesehen ist.
